(19) **Europäisches Patentamt / European Patent Office / Office européen des brevets**

(11) **EP 0 942 413 B1**

(12) **EUROPEAN PATENT SPECIFICATION**

(45) Date of publication and mention
of the grant of the patent:
**25.11.2009 Bulletin 2009/48**

(51) Int Cl.:
**G11B 5/596** (2006.01)

(21) Application number: **99104938.8**

(22) Date of filing: **12.03.1999**

(54) **Hard disk drive and head controlling method**

Festplatte und Verfahren zur Kopfsteuerung

Disque dur et méthode de contrôle de la tête

(84) Designated Contracting States:
**DE GB**

(30) Priority: **13.03.1998 US 39207**

(43) Date of publication of application:
**15.09.1999 Bulletin 1999/37**

(73) Proprietor: **SAMSUNG ELECTRONICS CO., LTD.
Suwon-City, Kyungki-do (KR)**

(72) Inventors:
• **Abed, MAJEED
Saratoga,
CA 95070 (US)**

• **Kang, Chang-Ik
San Jose,
CA 95134 (US)**

(74) Representative: **Grünecker, Kinkeldey,
Stockmair & Schwanhäusser
Anwaltssozietät
Leopoldstrasse 4
80802 München (DE)**

(56) References cited:
**EP-A- 0 247 339     US-A- 5 369 345
US-A- 5 521 771     US-A- 5 774 299**

• **PATENT ABSTRACTS OF JAPAN vol. 018, no. 394
(P-1775), 22 July 1994 & JP 06 111346 A (SONY
CORP), 22 April 1994**

**Description**

BACKGROUND OF THE INVENTION

1. Field of the Invention

The present invention relates in general to disk storage systems and more particularly, to a method and apparatus for providing servo loop gain calibration used in the servo system for positioning the read head of a hard disk drive.

2. Description of the Related Art

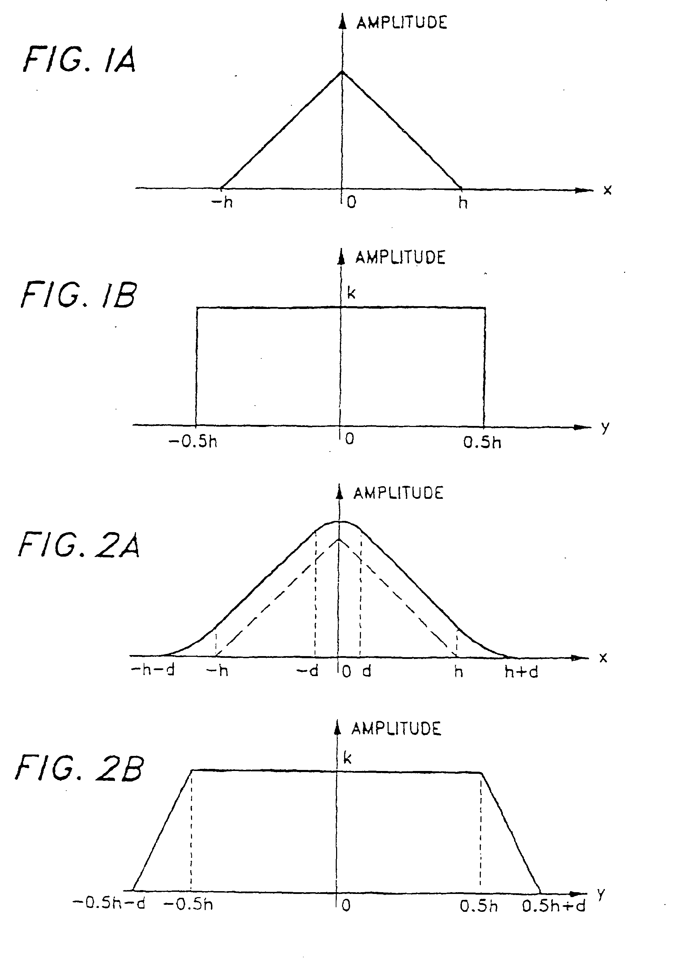

Disk drives are magnetic recording devices used for the storage of information. The information is recorded on concentric tracks on either surface of one or more magnetic recording disks. The disks are rotatably mounted to a spin motor and information is accessed by means of heads that are mounted to actuator arms which are rotated by a voice coil motor. The voice coil motor is excited with a current to rotate the actuator and move the heads. The read/write heads must be accurately aligned with the storage tracks on the disk to ensure proper reading and writing of information.
To accurately write and read data, it is desirable to maintain the head on the center of the track. To assist in controlling the position of the head, each sector of the disk typically contains a number of servo bits accurately located relative to the centerline of the track. The raw signals produced by the servo bits are typically demodulated into a position signal which is utilised by a servo system to determine the position of the head relative to the track, and to move the actuator arm if the head is not located on the track centerline.
The gain of the servo system typically varies wich respect to the head location on the disk surface. The main causes for such variation include variation in the position feedback gain and the variation in the acctuator torque constant. The variation in the gain of the servo system affects the gain at the crossover frequency, the phase and gain margins, and the settling time of the head, which in turn results in causing the head to overshoot and/or undershoot when attempting to reach and follow a particular crack location. Furthermore, higher than optimum serve loop gain can result in undesired high frequency components to be present in the loop error functions leading to increased read/write error rate. Similarly, lower than optimum servo loop gain can result in decreased servo loop shiffness increasing the low frequency compenents in the error function and causing poor rejection of shock and vibration inputs, also resulting in increased read/write error rate. Consequently, the production time of the disk drive increases, resulting in lowered production yield
Figure 1A is a graph illustrating the variation of the difference between servo burst signals (A-B) and (C-D) with respect to the position of the read head of a disk drive under near-ideal conditions. The variation of the difference between servo burst signals (A-B) or (C-D) with respect to the position of the read head is one typical technique used to provide correlational information between the amplitude of the position error signal and the distance between the head and the center of the track. Figure 1B is a graph illustrating the variation of the magnetic flux density flowing through a read head, with respect to the position of the read head of a disk drive under near-ideal conditions. The signal read from a servo burst is proportional to the magnetic flux flowing through the read head. As shown in Figure 13, in the absence of fringing effects, the magnetic field created by a servo burst abruptly becomes zero at the edges of the burst and the magnetic field density profile resembles a square wave. Under near-ideal conditions, the servo burst signals vary linearly the track position of the read head. Such linear variation permits the servo system to correct the off-track position of the read head.
however, in most disk drives, the actual variation of the servo burst signals with to the track position for an MR head is non-linear in nature and varies greatly between different heads. Figure 2A is a graph illustrating the variation of the difference between servo burst signals (A-B) and (C-D) wich respect to the position of the read head of a disk drive under actual conditions. The non-linear variation of the of the track profile is a result of fringing effects of the magnetic flux flowing through a read head. Figure 23 is a graph illustrating the variation of the magnetic flux density through read head, wich respect to track width, actual conditions. The variation magnetic flux density flowing the read head is expressed as follows:

$$
f(x) = \begin{cases}
K(2hd - x^2)/(2d), & 0 \le x \le d; \\
K(2h + d - 2x)/2, & d \le x \le h; \\
K(h + d - x)^2/(2d), & h \le x \le h + d.
\end{cases}
$$

where K is the amplitude of the magnetic flux density flowing through the read head; h is the track width and d is distance.

The non-linear variation of the magnetic flux density through the read head also results in a non-linear position signal. Since the position signal is proportional to the position feedback gain, variation of the position signal results in variation in the position feedback gain. To compensate for such variation in the position signal p, a normalization technique represented by the following expression is used:

$$p = (A - B)/(A + B)$$

where A and B are the servo burst values. However, it has been observed that such a normalization techniques does not provide a constant position feedback gain. In particular, it has been found that the track profile of a read head is proportional to the profile of the magnetic flux density, and that the track profiles obtained from reading burst A and burst B are identical, with the following exeption:

$$A(x) = f(x - h/2)$$

$$B(x) = f(x - h/2)$$

Considering the operation of the read head only over the linear portion of the track profile, the following expression is obtained:

$$(A - B) / (A + B) = 2x/(h + d)$$

It can then be observed that the position feedback gain is affected by the value d. Since d is not uniform with respect to the position of the head, the normalization technique (A-B)/(A+B) is also non-uniform with respect to head position.

The variation in the actuator torque constant also results in providing a non-constant servo system gain. To provide a uniform torque constant over the entire range of actuator positions, the magnetic flux density profile with respect to the actuator position, must be identical to that of a square wave. In practice, an abrupt change in the magnetic flux density at the edges of the burst, is impossible to achieve. As a result, it is not possible to provide uniform torque constant over the entire range of actuator positions.

Accordingly, there is a need in the technology for a method and apparatus for providing serve system having a constant gain so as to provide uniform servo system performance. The provision of such constant servo gain permits accurate alignment of the head over all locations of the disk, thereby increasing production yield.

US-A-5 369 345 describes a method and apparatus for adaptive control, in particular a track-following mode procedure. This procedure provides a compensated control, based on the current plant gain adjustment factor, which is based on the measured position, the adjusted control, and a single-frequency sampled sinusoid signal. The sinusoid signal is injected into the plant, and an output sinusoidal signal based on the actual position data is derived. The input and output signals are input to a gain control that adjusts the gain based on the input signals which are first added to a sinusoidal signal and then multiplied by a sinusoidal signal. Low pass filters are required for both inputs to the gain control.

BRIEF SUMMARY OF THE INVENTION

It is the object of the present invention to provide an improved method and apparatus for positioning a read head of a hard disk drive which facilitates a determination of the system gain.

This object of the present invention is solved by the subject matter of the independent claims.

Preferred embodiments are described by the dependent claims.

A method and apparatus for generating servo information used in positioning the read head of a hard disk drive. The apparatus comprises a housing, an actuator arm mounted to the housing, a head mounted to the actuator arm, a spin motor mounted to the housing, and a disk attached to the spin motor. The disk has a plurality of tracks, one of which has a servo field with a plurality of servo bits. A servo controller is coupled to the head for controlling reading of the servo bits. The servo controller has a compensation circuit that detects a system response of the hard disk drive at a predetermined frequency, based on the servo bits. The compensation circuit generates a servo signal based on said system response, at a predetermined frequency, for positioning the head.

BRIEF DESCRIPTION OF THE DRAWINGS

Figure 1A is a graph illustrating the variation of the difference between servo burst signals (A-B) and (C-D) with respect to the position of the read head of a disk drive under near-ideal conditions, as used in the prior art.

Figure 13 is a graph illustrating the variation of the magnetic flux density through a read head with respect to the position of the read head under near-ideal conditions, as used in the prior art.

Figure 2A is a graph illustrating the variation of the difference between servo burst signals (A-B) and (C-D) with respect to the position of the read head of a disk drive under non-ideal conditions, as used in the prior art.

Figure 2 B is graph illustrating the variation of the magnetic flux density through a read head wich respect to the position of the read head under near-ideal conditions, as used in the prior art.

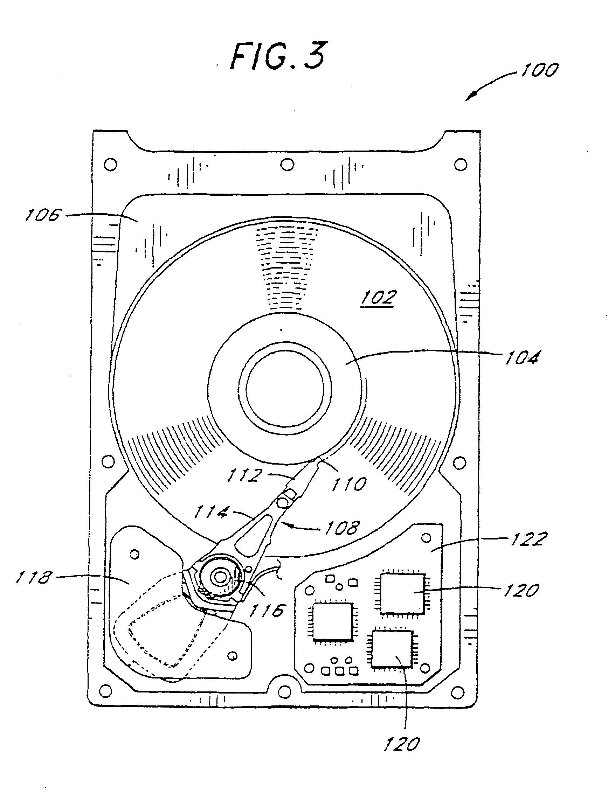

Figure 3 illustrates a hard disk drive which utilizes the method of the present invention.

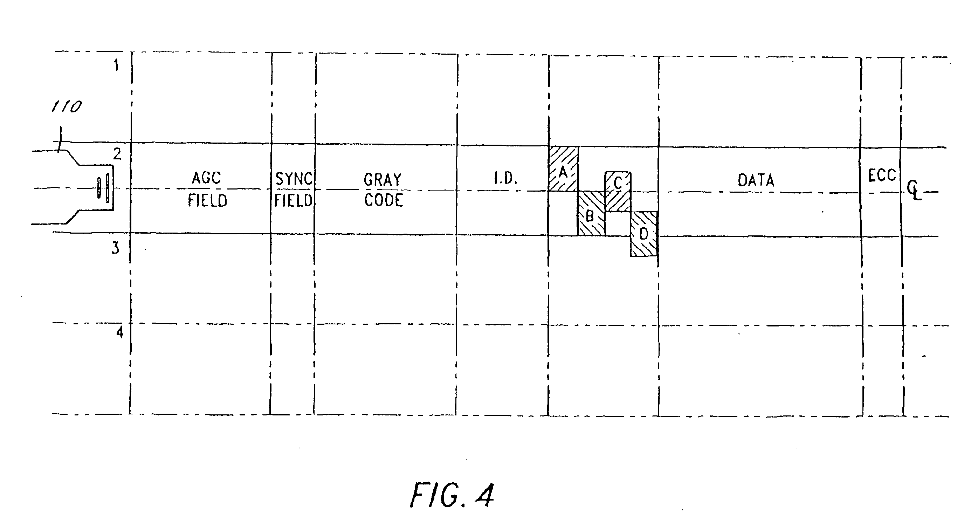

Figure 4 illustrates the general layout of the servo field region of a crack.

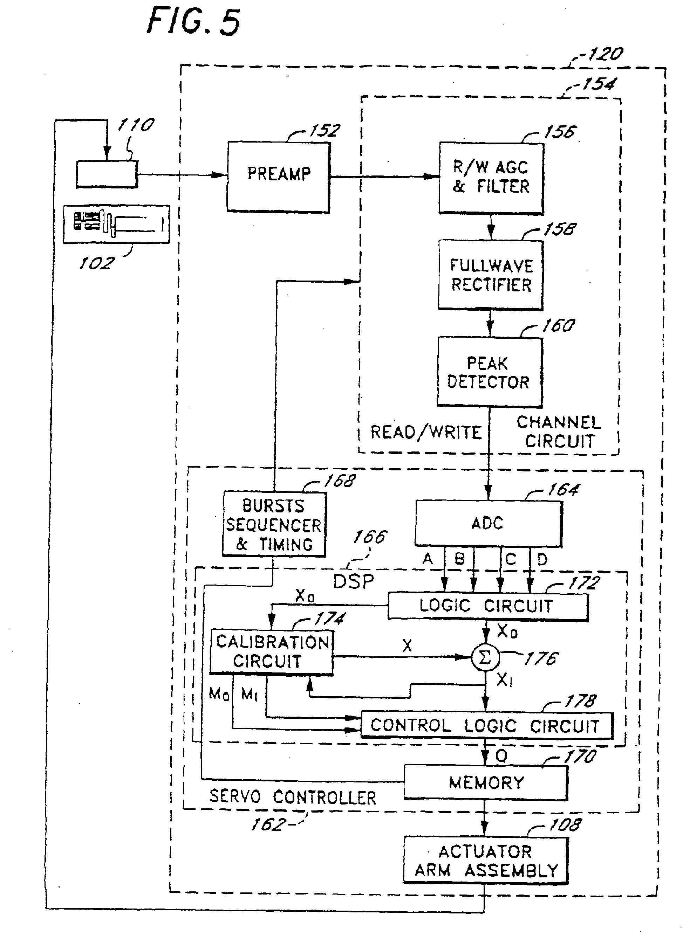

Figure 5 is a block diagram of portions of an integrated circuit read channel in accordance with the present invention.

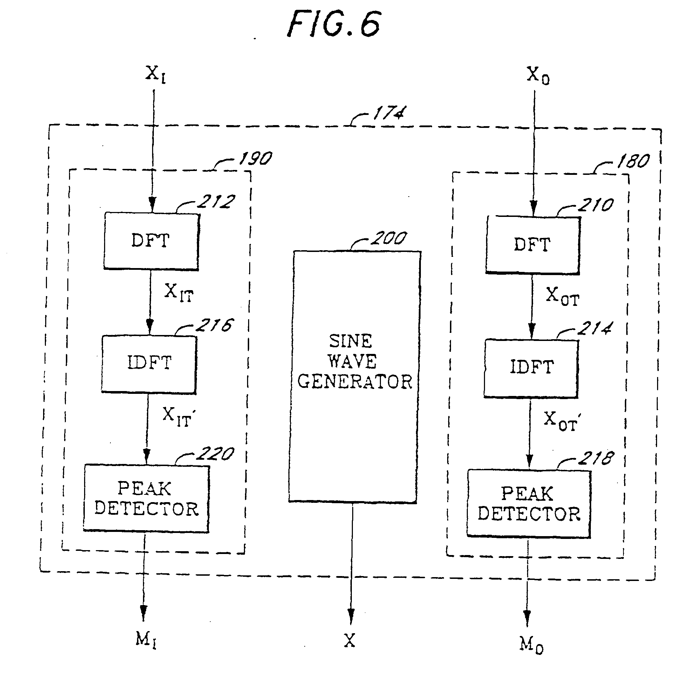

Figure 6 is a detailed block diagram of portions of the servo controller in accordance with the present invention.

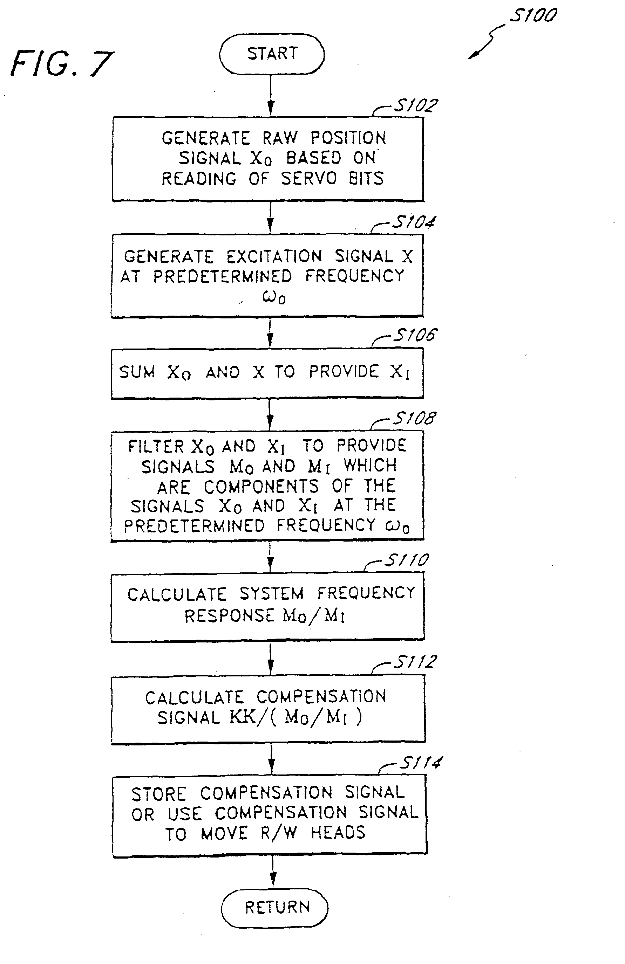

Figure 7 is a flowchart the servo loop gain determination process in accordance with the teachings of the present invention.

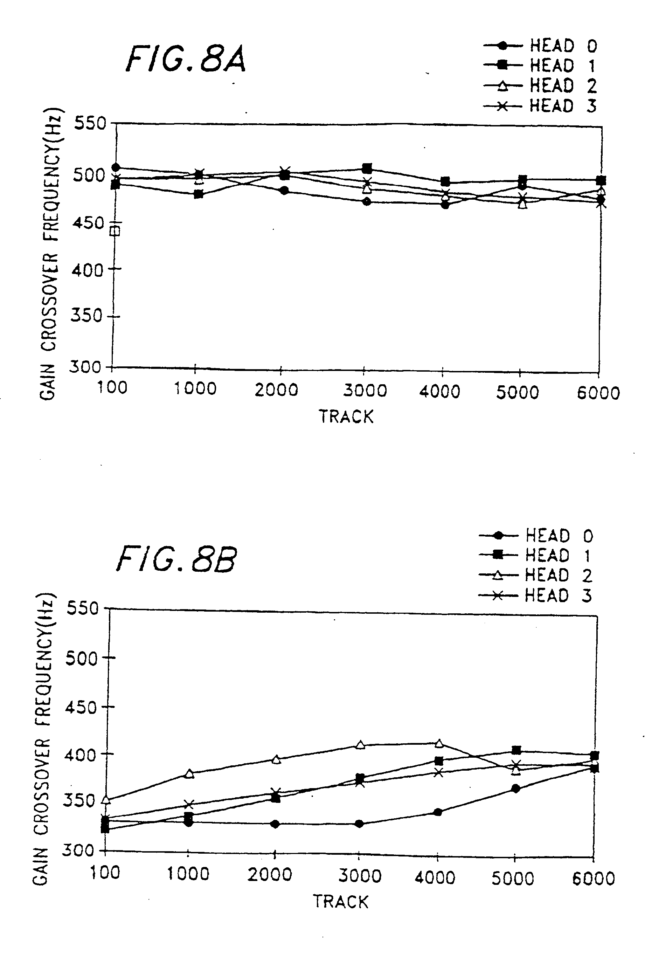

Figure 8A is a graph the gain crossover frequency of a typical disk drive with implementation of the process of the present invention.

Figure 8B is a graph of the gain crossover frequency of a typical disk drive without implementing the process of the present invention.

DETAILED DESCRIPTION OF THE INVENTION

The present invention provides an apparatus and method of identifying servo loop gain. Based on such identification, compensation of the servo loop gain variation is provided so as to facilitate uniform servo performance. The servo loop gain is first identified by measuring the open loop frequency response of the servo system at a particular frequency. To accomplish this, a sinusoidal excitation signal with a predetermined frequency is first added to the position signal during the track-following operation. Upon reaching steady state, the amplitudes of the input and output signals to the servo system, are detected. The input and output signals are filtered to eliminate noise. Based on the filtered input and output signals, the magnitude of the frequency response of the servo system at the predetermined frequency is obtained. The servo loop gain is then adjusted so that the magnitude of the frequency response at a predetermined frequency is uniform over all head locations.

A. Implementation

Referring to the drawings more particularly by reference numbers, Figure 3 shows a hard disk drive 100. The disk drive 100 includes a disk 102 that is rotated by a spin motor 104. The spin motor 104 is mounted to a base place 105. Also mounted to the base plate 106 is an actuator arm assembly 108. The actuator arm assembly 103 includes a number of heads 110 mounted to corresponding flexure arms 112. The flexure arms 112 are attached to an actuator arm 114 that can rotate about a bearing assembly 116. The assembly 108 also contains a voice coil 118 that is coupled to the magnets 119 that are mounted to the base plate 106. Energizing the voice coil 118 moves the heads 110 relative to the disk 102. There is typically a single head for each disk surface. The spin motor 104, voice coil 118 and the heads 110 are coupled to a number of electronic circuits 120 mounted to a printed circuit board 122. In the following discussion, only one head 110 is referenced. The electronic circuits 120 typically include a read channel circuit, a microprocessor-based controller and a random access memory (RAM) device.

As shown in Figure 4, data is typically stored within sectors of radially concentric tracks located across the disk 102. A typical sector will have an automatic gain control (AGC) field a synchronization (sync) field , a gray code field that identifies the track, an identification (ID) field that defines the sector, a servo field which includes a number of servo bits A, 3, C, D, a data field which contains the data and an error correction code field . In operation, the head 110 is moved to a track and the servo information provided in servo field is read and provided to the electronic circuits 120 The electronic circuits 120 utilize the variation in the servo bits (A - B) or (C - D) to generate Q, a positioning signal for aligning the head 110.

Figure 5 is a block diagram of an electronic circuit 120 of the drive. The electronic circuit 120 includes a preamplifier 152 which is coupled to a read/write (R/W) channel circuit 154. The R/W channel circuit 154 includes a R/W Automatic Gain Control (AGC), a filter circuit 156, a fullwave rectifier 158 and a peak detector 160. The electronic circuit 120 further comprises a microprocessor-based servo controller 162 which includes an analog-to-digital converter (ADC) 164, a digital signal processor (DSP) 166, a burst sequencer and timing circuit 163 and a memory 170, such as a random access memory (RAM) device. The DSP 166 includes a logic circuit 172, a calibration circuit 174, a summing circuit 176 and a control logic circuit 178.

The electronic circuit 120 is coupled to one of the magnetic heads 110 which senses the magnetic field of a magnetic disk 102. When reading the servo information located in the servo field region 10 on the disk 102, the head 110 generates a read signal that corresponds to the magnetic field of the disk 102. The read signal is first amplified by the preamplifier 152, and then provided to the R/W channel circuit 154. The AGC data included in the read signal is provided to the R/W AGC and filler circuit 156. The R/W AGC circuit in 156 monitors the AGC data provided by the read signal and read signal is then filtered by the filter circuit located in the R/W AGC and filler circuits L 50. The fullwave rectifier 158 rectifies the read signal and provides the read signal to the peak detector 160. The peak detector 160 detects the amplitude of the read signal. The read signal is then provided to the ADC 164 which provides digitized samples of the analog read signal. The digitized signal is then provided to a logic circuit 172 located within the DSP 166. The logic circuit 172 generates a position signal $X_O$, based on the servo bits A, B, C and D that are read by the head 110. The position signal $X_O$ is provided to the calibration circuit 174 and to the summing circuit 176. The calibration circuit 174 calibrates the servo loop gain of the disk drive 100. The servo loop gain is obtained by measuring the open loop frequency response of the servo at a predetermined frequency, over a plurality of head locations

In particular, a sinusoidal excitation signal X with the predetermined frequency is first added to the position signal Xo. Upon reaching steady state, the amplitudes of the input and output signals $X_I$, $X_O$ are detected and computed by the calibration circuit 174 to obtain the magnitude of frequency response $M_Z$, $M_O$, at the predetermined frequency. Based on the data obtained, the control logic circuit 178 calculates and plots the loop gain variation. The control logic circuit 178 also calculates a compensated position signal Q which includes compensation for the loop gain variation. This compensated position signal Q is uniform over all head locations. The resulting loop gain variation and the compensated position signal Q are stored in memory 170. The compensated position signal Q is subsequently provided to the actuator arm assembly 108 to move the heads 110. Alternatively, the compensated position signal Q can be provided directly to the actuator arm assembly 108 to move heads 110.

Figure 6 is a detailed schematic diagram of the calibration circuit 174 of Figure 5, in accordance with the teachings of the present invention. The calibration circuit 174 comprises a first filter 180, a second filter 190 and a wave generator 200. Each filter 180 and 190 comprises a Discrete Fourier Transform circuit 210, 212, an Inverse Discrete Transform circuit 216 and 214, and a peak defector 218, 220. The wave generator 200 generates a sine wave signal X, which is added via the summing circuit 176 to the position signal $X_O$ generated by the logic circuit 172. The output $X_I$ of the summing circuit 176 is provided to both the calibration circuit 174 and the control logic circuit 178. The calibration circuit 174 then detects the open loop frequency response of the disk drive 100 based on the signals $X_O$ and $X_I$.

More particularly, a sinusoidal excitation signal X with a specific frequency $(\omega_0)$ is added to the position signal $X_O$ using the summing circuit 175. The $X_O$ of the summing circuit is provided to both the calibration circuit 174 and the control logic circuit 178. To generate a sinusoidal wave X with frequency $(\omega_0)$, the following trigonometric identity is applied:

$$\cos\left(\omega_0(n + 1)T\right) = \cos\left(\omega_0\right)\cos\left(\omega_0 nT\right) - \sin\left(\omega_0 T\right) - \sin\left(\omega_0 nT\right)$$

$$\sin\bigl(\omega_0(n+1)T\bigr) = \sin\bigl(\omega_0\bigr)\cos\bigl(\omega_0 nT\bigr) + \cos\bigl(\omega_0 T\bigr) - \sin\bigl(\omega_0 nT\bigr)$$

where n is an integer and T is time. A recursively sinusoidal wave X with an amplitude (M) and the frequency $\omega_0$ may be generated from the following state equation and the initial value:

$$\begin{bmatrix} X_C(n+1) \\ X_S(n+1) \end{bmatrix} = \begin{bmatrix} \cos\bigl(\omega_0 T\bigr) & -\sin\bigl(\omega_0 T\bigr) \\ \sin\bigl(\omega_0 T\bigr) & \cos\bigl(\omega_0 T\bigr) \end{bmatrix}\begin{bmatrix} X_C(n) \\ X_S(n) \end{bmatrix}, \begin{bmatrix} X_C(0) \\ X_S(0) \end{bmatrix} = \begin{bmatrix} M \\ 0 \end{bmatrix},$$

where, $X_C$ is a cosine state and $X_S$ is a sine state.

Upon reaching steady state, after applying sinusoidal excitation, values of $X_O$ and $X_I$ are recorded for N samples to facilitate computation of the open loop frequency response at the selected frequency $\omega_0$. Because phase response is not a function of on loop again, only the magnitude response is considered.

The signals $X_O$ and $X_I$ are first provided to a Discrete Fourier Transform (DFT) circuit 210 and 212 respectively. The transformed input and output signals $X_{OT}$ and $X_{IT}$ are then each provided to an Inverse Fourier Transform (IDFT) 214 and 216 respectively. The resulting signals $X_{OT}$ and $X_{IT}$ are then each provided to a peak detector 218 and 220 respectively. This is implemented so as to eliminate any noise components present due to bias force and runout disturbance.

In particular, Discrete Fourier Transform (DFT) circuits 210 and 212 each transforms the signals $X_O$ and $X_I$ respectively, to the frequency domain. This is accomplished by computing the best fit of the sine wave signal X to experimental data of the signals $X_O$ and $X_I$ using a least-squares technique, as is known by one of ordinary skill in the art. If the best fit to given data is defined as $A_C \cos(\omega_0 nT) + As \sin(\omega_0 nT)$ the Fourier coefficients are

$$A_C = \frac{1}{N}\sum_{n=1}^{n=N} X(n)X_C(n), \quad A_S = \frac{1}{N}\sum_{n=1}^{n=N} X(n)X_S(n)$$

where Ac is the Fourier coefficient of the cosine state and As is the Fourier coefficient of the sine state. From $A_C$ and $A_S$, the amplitudes of the signals $X_O$ and $X_I$, i.e., $\sqrt{A_c^2 + A_s^2}$ needed for calculating the system magnitude response, may be obtained.

To obtain the open loop frequency response at the selected frequency $\omega_0$, the transformed signals $X_{OT}$ and $X_{IT}$ are then each provided to an Inverse Fourier Transform (IDFT) 214 and 216 respectively. As a result, the amplitudes of the resulting signals $X_{OT}$ and $X_{IT}$, which may be expressed in the form $X(n) = A_C X_C(n) + A_S X_S(n)$, may be obtained. The resulting signals $X_{OT}$ and $X_{IT}$ are then each provided to a peak detector 218 and 220 respectively, which compares the signals $X_{OT}$ and $X_{IT}$ to a reference value corresponding to the selected frequency $\omega_0$. Values below this reference value are not output, while values above this reference value are provided as outputs. This process filters out all noise components and facilitates the calculation of the open loop frequency response $M_O/M_I$ at the frequency $\omega_0$.

After measuring the magnitude of open loop frequency response over a plurality of head locations, the loop gain variation may be observed. In one embodiment, the magnitude of frequency response is measured at several head locations during initialization. The magnitude of frequency response at other head locations is then computed based on these measurements using linear interpolation. The results are stored into memory. Based on the loop gain variation, a compensated position signal Q (based on the open loop frequency response) is generated and used to maintain the heads 110 on the centerline CL of the track. If the heads 110 are off-center, the electronic circuits 120 will generate a position signal Q which has a voltage amplitude that varies with the distance that the heads 110 are off-set from the track centerline. In a preferred embodiment, the position signal Q compensates for loop again variation in such a way that the magnitude of the frequency response at one frequency is uniform over every head location.

Figure 7 is a flowchart illustrating the servo loop gain determination and compensation process S100 in accordance with the teachings of the present invention. Beginning from a start state, the process S100 proceeds to process step S102, where it generates the raw position signal $X_O$ based on the servo bits A, B, C and D. The process S100 then proceeds to process step S104, where it generates an excitation signal X having a predetermined frequency $\omega_0$. The process S100 then sums $X_O$ and X to provide the signal $X_I$ (step S106). Next, the process S100 advances to process step S108, where the signals $X_O$ and X are filtered to provide signals $M_O$ and $M_I$, which are components of the signals $X_O$ and $X_I$ at the predetermined frequency $\omega_0$. The process S100 then proceeds to calculate the open loop frequency response $M_O/M_I$ (process step S110). Next, the process calculates the compensated position signal $KK/(M_O/M_I)$, as shown in process step S112. The compensated position signal is then stored in memory 170, as shown in process step S114. Alternatively, the compensated position signal can be provided directly to the actuator arm assembly 108 to move the heads 110. The process S100 then terminates.

B. Experimental Results

In one embodiment, a sinusoidal excitation signal x with 25CHz is provided as an input to the servo system. For exact generation of the sinusoidal wave, the poles must be located on unit circle. But due to quantization effect of fixed point calculation, pole location may deviate from unit circle and sinusoidal wave generation may be unstable. For stable generation, the states of $X_C$ and $X_S$ must be set to their initial values whenever the new cycle starts. The state equation used in this embodiment is expressed as follows:

$$\begin{bmatrix} X_C(n+1) \\ X_S(n+1) \end{bmatrix} = \begin{bmatrix} 0.9709 & -0.2393 \\ 0.2393 & -0.9709 \end{bmatrix} \begin{bmatrix} X_C(n) \\ X_S(n) \end{bmatrix}, \begin{bmatrix} X_C(0) \\ X_S(0) \end{bmatrix} = \begin{bmatrix} 128 \\ 0 \end{bmatrix},$$

The choice of the data interval in the DFT operation is very important in providing accurate operation. In one embodiment, a 3-period data interval is selected so as to facilitate accurate results. Based on the above-specified parameters, the magnitude of open loop frequency response over a plurality of head locations is measured.

The servo loop gain is then adjusted so that the magnitude of the open loop frequency response at 250Hz is 6dB over all head locations on the disk surface. This is accomplished by providing a position signal having a compensation value of $KK/(M_O/M_I)$, where KK is a constant. In one embodiment, KK is 1.9953 or 6dB. The value of 1.9953 or 6 dB was chosen to provide a gain crossover frequency of 500 Hz. By way of example, if the sinusoidal excitation signal has a frequency of f, then the resulting gain crossover frequency will be $f/2^n$, where n = 0, 1, 2, 3, ... In general, any desired combination of excitation and gain ratio can be chosen to achieve desired gain calibration.

Based on the above described parameters, the gain crossover frequency at several head locations are measured. Figure 8A is a graph of the gain crossover frequency of a typical disk drive with implementation of the compensation process of the present invention Figure 83 is a graph of the gain crossover frequency of a typical disk drive without implementing the compensation process of the present invention. As can be observed in Figure 8A, the variation in gain crossover frequency is 30 Hz when the compensation process of che present invention is applied, while the variation in gaincross over frequency is 100 Hz when no compensation is implemented, as shown in Figure 8B. This illustrates that the variation in servo performance over all head locations is reduced significantly when the compensation process of the present invention is applied.

By implementing the present invention, a servo system having a constant gain may be provided. As a result, uniform servo system performance is facilitated. The provision of such constant servo gain permits accurate alignment of the head over all locations of the disk, thereby increasing production yield.

While certain exemplary embodiments have been described and shown in the accompanying drawings, it is to be understood that such embodiments are merely illustrative of and not restrictive on the broad invention, and that this invention not be limited to the specific constructions and arrangements shown and described, since various other modifications may occur to those ordinarily skilled in the art.

**Claims**

1. A hard disk drive (100), comprising:

   a head (110);
   a disk (102) having a plurality of tracks, one of said tracks having a servo field with a plurality of servo bits (A, B, C, D); and
   a servo controller (162) coupled to said head for controlling reading of the servo bits, said servo controller having a compensation circuit (174, 178) that detects, based on the servo bits, a system response of the hard disk drive at a predetermined frequency, for positioning said head,
said compensation circuit (174, 178) comprises a wave generator (200) adapted to generate an input signal (X), said servo controller further comprising a circuit (172) adapted to generate an initial position signal ($X_0$) based on a reading of the servo bits,

**Characterized in that** said servo controller(162) is adapted to provide an output signal ($X_I$) as the sum of said input signal(X) and said initial position signal ($X_0$), wherein said system response is based on said initial position signal and said output signal; and
wherein said servo controller (162) further provides first and second filters (180, 190), each comprising a Discrete Fourier Transform circuit (210, 212), an Inverse Discrete Fourier Transform circuit (214, 216) that is coupled to said Discrete Fourier Transform circuit (210, 212), and a peak detector (218, 220) that is coupled to said Inverse Discrete Fourier Transform circuit (214, 216), wherein said initial position signal ($X_0$) is provided to said first filter (180) and said output signal ($X_1$) is provided to said second filter (190);
wherein said first filter (180) filters said initial position signal ($X_o$) to provide a component ($M_o$) of said initial position signal at said predetermined frequency and said second filter (190) filters said output signal ($X_1$) to provide a component ($M_1$) of said output signal at said predetermined frequency; and
wherein said compensation circuit (174; 178) is adapted to generate a servo signal (Q) based on a reciprocal of a ratio of said component ($M_o$) of said initial position signal and said component ($M_1$) of said output signal.

2. The hard disk drive (100) according to claim 1, wherein said servo signal (Q) is a multiple of said reciprocal.

3. The hard disk drive (100) according to claim 1, wherein said wave generator (200) is a sine wave generator.

4. The hard disk drive (100) according to one of claims 1 to 3, wherein said servo signal (Q) is stored in a memory (170).

5. The hard disk drive (100) according to one of claims 1 to 4, wherein said servo signal (Q) is provided to an actuator arm assembly (108) for controlling a position of said head (110).

6. The hard disk drive (100), according to one of claims 1 to 5, further comprising a housing, an actuator arm (114) mounted to said housing, and a spin motor (104) mounted to said housing, wherein said head (110) is mounted to said actuator arm (114) and said disk (102) is attached to said spin motor (104).

7. A method for controlling a head (110) of a hard disk drive (100) having a disk (102), said disk having a plurality of tracks, one of said tracks having a servo field with a plurality of servo bits (A, B, C, D), the method comprising the steps of:

reading (S102) the plurality of servo bits;
generating (S102) an initial position signal ($X_o$) based on said servo bits;
detecting (S104-S110)based on said servo bits, a system response of the hard disk drive (100) at a predetermined frequency;
generating (S112) a servo signal (Q) based on said system response; and
positioning (S114) said head (110) in accordance with the servo signal,

wherein the step of detecting comprises the steps of:

generating (S104) an input signal (X);
generating (S106) an output signal ($X_I$) as the sum of said input signal (X) and said initial position signal ($X_O$);
filtering (S108) said initial position signal comprising the steps of applying a Discrete Fourier Transform to said initial position signal, applying an Inverse Discrete Fourier Transform to said transformed initial position signal ($X_{OT}$), and providing said inverse transformed initial position signal ($X_{OT}$) to a peak detector, said peak detector providing an output if said initial position signal is above a reference level
filtering (S108) said output signal; and
calculating (S110) said system response based on said initial position signal and said output signal;

wherein the step of filtering(S108) said output signal ($X_I$) comprises the steps of applying a Discrete Fourier Transform to said output signal, applying an Inverse Discrete Fourier Transform to said transformed output signal ($X_{IT}$), and providing said inverse transformed output signal ($X_{IT}$) to a peak detector, said peak detector providing an output if said output signal is above a reference level;

wherein said initial position signal ($X_O$) is filtered to provide a component ($M_O$) of said initial position signal at said predetermined frequency and wherein said output signal ($X_I$) is filtered to provide a component ($M_I$) of said output signal at said predetermined frequency; and

wherein said servo signal (Q) is based on a reciprocal of a ratio of said component ($M_O$) of said initial position signal and said component ($M_I$) of said output signal.

8. The method according to claim 7, wherein said servo signal (Q) is a multiple of said reciprocal.

9. The method according to one of claims 7 and 8, further comprising the step of storing (S114) a value of said servo signal (Q) in memory.

10. The method according to one of claims 7 to 9, wherein the step of positioning (S114) includes the step of providing said servo signal (Q) to an actuator arm assembly (108) for controlling a position of said head.

**Patentansprüche**

1. Festplattenlaufwerk (100), umfassend:

   einen Kopf (110);
   eine Platte (102), die eine Vielzahl von Spuren umfasst, wobei eine der Spuren ein Servo-Feld mit einer Vielzahl von Servo-Bits (A, B, C, D) aufweist; und
   eine Servo-Steuereinheit (162), die mit dem Kopf verbunden ist, zum Steuern eines Lesens der Servo-Bits, wobei die Servo-Steuereinheit einen Ausgleichsschaltkreis (174, 178) aufweist, der basierend auf den Servo-Bits eine Systemantwort des Festplattenlaufwerks bei einer vorbestimmten Frequenz detektiert, um den Kopf zu positionieren,

   wobei der Ausgleichsschaltkreis (174, 178) einen Wellengenerator (200) umfasst, der eingerichtet ist, um ein Eingangssignal (X) zu erzeugen, wobei die Servo-Steuereinheit des Weiteren einen Schaltkreis (172) umfasst, der eingerichtet ist, um ein Anfangspositionssignal ($X_0$) basierend auf einem Lesen der Servo-Bits zu erzeugen, **gekennzeichnet dadurch, dass**
   die Servo-Steuereinheit (162) eingerichtet ist, um ein Ausgangssignal ($X_1$) als die Summe des Eingangssignals (X) und des Anfangspositionssignals ($X_0$) bereitzustellen, wobei die Systemantwort auf dem Anfangspositionssignal und dem Ausgangssignal basiert; und
   wobei die Servo-Steuereinheit (162) des Weiteren erste und zweite Filter (180, 190) bereitstellt, die jeweils einen Diskrete-Fourier-Transformations-Schaltkreis (210, 212), einen Inverse-Diskrete-Fourier-Transformations-Schaltkreis (214, 216), der mit dem Diskrete-Fourier-Transformations-Schaltkreis (210, 212) verbunden ist, und einen Signalspitzendetektor (218, 220), der mit dem Inverse-Diskrete-Fourier-Transformations-Schaltkreis (214, 216) verbunden ist, umfassen, wobei das Anfangspositionssignal ($X_0$) dem ersten Filter (180) zur Verfügung gestellt wird und das Ausgangssignal ($X_1$) dem zweiten Filter (190) zur Verfügung gestellt wird;
   wobei das erste Filter (180) das Anfangspositionssignal ($X_0$) filtert, um eine Komponente ($M_0$) des Anfangspositionssignals bei der vorbestimmten Frequenz zur Verfügung zu stellen und das zweite Filter (190) das Ausgangssignal ($X_1$) filtert, um eine Komponente ($M_1$) des Ausgangssignals bei der vorbestimmten Frequenz zur Verfügung zu stellen; und
   wobei der Ausgleichsschaltkreis (174; 178) eingerichtet ist, um ein Servosignal (Q) basierend auf einem Kehrwert eines Verhältnisses der Komponente ($M_0$) des Anfangspositionssignals und der Komponente ($M_1$) des Ausgangssignals zu erzeugen.

2. Festplattenlaufwerk (100) gemäß Anspruch 1, wobei das Servosignal (Q) ein Vielfaches des Kehrwerts ist.

3. Festplattenlaufwert (100) gemäß Anspruch 1, wobei der Wellengenerator (200) ein Sinuswellengenerator ist.

4. Festplattenlaufwerk (100) gemäß einem der Ansprüche 1 bis 3, wobei das Servosignal (Q) in einer Speichereinrichtung (170) gespeichert wird.

5. Festplattenlaufwerk (100) gemäß einem der Ansprüche 1 bis 4, wobei das Servosignal (Q) einer Aktuator-Arm-Einrichtung (108) zur Verfügung gestellt wird, um eine Position des Kopfs (110) zu steuern.

**6.** Festplattenlaufwerk (100) gemäß einem der Ansprüche 1 bis 5, des Weiteren umfassend ein Gehäuse, einen Aktuator-Arm (114), welches an dem Gehäuse angebracht ist, und ein Drehmotor (104), der an dem Gehäuse angebracht ist, wobei der Kopf (110) an dem Aktuator-Arm (114) angebracht ist und die Platte (102) an den Drehmotor (104) befestigt ist.

**7.** Verfahren um einen Kopf (110) eines Festplattenlaufwerks (100), welches eine Platte (102) aufweist, zu steuern, wobei die Platte eine Vielzahl von Spuren hat, und eine der Spuren ein Servo-Feld umfasst, mit einer Vielzahl von Servo-Bits (A, B, C, D),
wobei das Verfahren die Schritte umfasst:

Lesen (S102) der Vielzahl von Servo-Bits;
Erzeugen (S102) eines Anfangspositionssignals ($X_0$) basierend auf den Servo-Bits;
Ermitteln (S104-S110), basierend auf den Servo-Bits, einer Systemantwort des Festplattenlaufwerks (100) bei einer vorbestimmten Frequenz;
Erzeugen (S112) eines Servosignals (Q) basierend auf der Systemantwort; und
Positionieren (S114) des Kopfs (110) gemäß dem Servosignal;

wobei der Schritt des Ermittelns die Schritte umfasst:

Erzeugen (S104) eines Eingangssignals (X);
Erzeugen (S106) eines Ausgangssignals ($X_1$) als die Summe des Eingangssignals (X) und des Anfangspositionssignals ($X_0$);
Filtern (S108) des Anfangspositionssignals, wobei das Filter die Schritte Anwenden einer diskreten Fouriertransformation auf das Anfangspositionssignal, Anwenden einer inversen diskreten Fouriertransformation auf das transformierte Anfangspositionssignal ($X_{0T}$), und zur Verfügung stellen des inversen transformierten Anfangspositionssignals ($X_{0T}$) an einen Signalspitzendetektor umfasst, wobei der Signalspitzendetektor ein Ausgangssignal bereitstellt, wenn das Anfangspositionssignal oberhalb eines Bezugsniveaus liegt;
Filtern (S108) des Ausgangssignals; und
Berechnen (S110) der Systemantwort basierend auf dem Anfangspositionssignal und dem Ausgangssignal;

wobei der Schritt des Filterns (S108) des Ausgangssignals ($X_1$) die Schritte Anwenden einer diskreten Fouriertransformation auf das Ausgangssignal, Anwenden einer inversen diskreten Fouriertransformation auf das transformierte Ausgangssignal ($X_{1T}$), und zur Verfügung stellen des inversen transformierten Ausgangssignals ($X_{1T}$) zu einem Signalspitzendetektor umfasst, wobei der Signalspitzendetektor ein Signal ausgibt, wenn das Ausgangssignal oberhalb eines Bezugsniveaus liegt;
wobei das Anfangspositionssignal ($X_0$) gefiltert wird, um eine Komponente ($M_0$) des Anfangspositionssignals bei der vorbestimmten Frequenz zur Verfügung zu stellen und wobei das Ausgangssignal ($X_1$) gefiltert wird, um eine Komponente ($M_1$) des Ausgangssignals bei der vorbestimmten Frequenz zur Verfügung zu stellen; und
wobei das Servosignal (Q) auf einen Kehrwert eines Verhältnisses der Komponente ($M_0$) des Anfangspositionssignals und der Komponente ($M_1$) des Ausgangssignals basiert.

**8.** Verfahren gemäß Anspruch 7, wobei das Servosignal (Q) ein Vielfaches des Kehrwerts ist.

**9.** Verfahren gemäß einem der Ansprüche 7 oder 8, des Weiteren umfassend den Schritt des Speicherns (S114) eines Werts des Servosignals (Q) in einer Speichereinrichtung.

**10.** Verfahren gemäß einem der Ansprüche 7 bis 9, wobei der Schritt des Positionierens (S114) einen Schritt des Bereitstellens des Servosignals (Q) an eine Aktuator-Arm-Einrichtung (108) zum Steuern einer Position des Kopfs umfasst.

**Revendications**

**1.** Un lecteur de disque dur (100), comprenant :

une tête (110) ;
un disque (102) disposant d'une pluralité de pistes, l'une desdites pistes disposant d'un servo champ avec une pluralité de servo bits (A, B, C, D) ; et

un servo contrôleur (162) couplé à ladite tête pour contrôler la lecture des servo bits, ledit servo contrôleur ayant un circuit de compensation (174, 178) qui détecte, sur la base des servo bits, une réponse système du lecteur de disque dur à une fréquence prédéterminée, pour positionner ladite tête, ledit circuit de compensation (174, 178) comprenant un générateur d'ondes (200) adapté à la génération d'un signal d'entrée (X), ledit servo contrôleur comprenant en outre un circuit (172) conçu pour générer un signal de position initiale ($X_0$) sur la base d'une lecture des servo bits,

**caractérisé par le fait que**
ledit servo contrôleur (162) est adapté pour fournir un signal de sortie ($X_1$) comme la somme dudit signal d'entrée (X) et dudit signal de position initiale ($X_0$), où la réponse du système se base sur ledit signal de position initiale et sur ledit signal de sortie ; et
où ledit servo contrôleur (162) fournit en outre des premiers et seconds filtres (180, 190), comprenant chacun un circuit de transformation de Fourier discrète (Discrète Fourier Transform circuit) (210, 212), un circuit de transformation de Fourier discrete inverse (Inverse Discrete Fourier Transform circuit) (214, 216) qui est couplé avec ledit circuit de transformation de Fourier discrète (Discrete Fourier Transform circuit) (210, 212), et un détecteur de pointe (218, 220) qui est couplé avec ledit circuit de transformation de Fourier discrète inverse (Discrete Fourier Transform circuit) (214, 216), où ledit signal de position initiale ($X_0$) est fourni audit premier filtre (180) et ledit signal de sortie ($X_1$) est fourni au dit second filtre (190) ;
où ledit premier filtre (180) filtre ledit signal de position initiale ($X_0$) pour fournir un composant ($M_0$) dudit signal de position initiale à ladite fréquence prédéterminée et où ledit second filtre (190) filtre ledit signal de sortie ($X_I$) pour fournir un composant ($M_I$) dudit signal de sortie à ladite fréquence prédéterminée ; et
où ledit circuit de compensation (174; 178) est adapté pour générer un servo signal (Q) sur la base d'une réciproque d'un ratio dudit composant ($M_o$) dudit signal de position initiale et dudit composant ($M_I$) dudit signal de sortie.

2. Le lecteur de disque dur (100) selon la revendication 1, où ledit servo signal (Q) est un multiple de ladite réciproque.

3. Le lecteur de disque dur (100) selon la revendication 1, où ledit générateur d'ondes (200) est un générateur de sinusoïdes.

4. Le lecteur de disque dur (100) selon l'une des revendications 1 à 3, où ledit servo signal (Q) est stocké dans une mémoire (170).

5. Le lecteur de disque dur (100) selon l'une des revendications 1 à 4, où ledit servo signal (Q) est fourni à un assemblage de bras actuateur (108) pour contrôler une position de ladite tête (110).

6. Le lecteur de disque dur (100) selon l'une des revendications 1 à 5, comprenant en outre un habitacle, un bras actuateur (114) monté sur ledit habitacle, et un moteur à rotation (104) monté sur ledit habitacle, où ladite tête (110) est montée sur ledit bras actuateur (114) et ledit disque (102) est attaché audit moteur à rotation (104).

7. Un procédé pour contrôler une tête (110) d'un lecteur de disque dur (100) ayant un disque (102), ledit disque ayant une pluralité de pistes, l'une desdites pistes ayant un servo champ avec une pluralité de servo bits (A, B, C, D), le procédé comprenant les étapes de :

lecture (S102) de la pluralité de servo bits ;
génération (S102) d'un signal de position initiale ($X_0$) basé sur lesdits servo bits ;
détection (S104-S110) sur la base desdits servo bits, d'une réponse système du lecteur de disque dur (100) à une fréquence prédéterminée ;
génération (S112) d'un servo signal (Q) sur la base de ladite réponse système ; et
positionnement (S114) de ladite tête (110) selon le servo signal,

où l'étape de détection comprend les étapes de :

génération (S104) d'un signal d'entrée (X) ;
génération (S106) d'un signal de sortie ($X_I$) comme la somme dudit signal d'entrée (X) et dudit signal de position initiale ($X_0$) ;
filtrage (S108) dudit signal de position initiale comprenant les étapes d'application d'une transformation de Fourier discrète (Discrète Fourier Transform) audit signal de position initiale, appliquant une transformation de Fourier discrète inverse (Inverse Discrète Fourier Transform) au dit signal de position initiale transformé ($X_{0T}$),

et fournissant ledit signal de position initiale transformé inverse ($X_{0T}$) à un détecteur de pointe, ledit détecteur de pointe fournissant une sortie si ledit signal de position initiale se situe au dessus d'un niveau de référence ; filtrage (S108) dudit signal de sortie ; et

calcul (S110) de ladite réponse système sur la base dudit signal de position initiale et dudit signal de sortie ;

où l'étape de filtrage (S108) dudit signal de sortie ($X_I$) comprend les étapes d'application d'une transformation de Fourier discrète (Discrète Fourier Transform) audit signal de sortie, appliquant une transformation de Fourier discrète inverse (Inverse Discrète Fourier Transform) audit signal de sortie transformé ($X_{IT}$), et fournissant ledit signal de sortie transformé inverse ($X_{IT}$) à un détecteur de pointe, le détecteur de pointe fournissant une sortie si ledit signal de sortie se situe au dessus d'un niveau de référence ;

où ledit signal de position initiale ($X_O$) est filtré pour fournir un composant ($M_O$) dudit signal de position initiale à ladite fréquence prédéterminée et où ledit signal de sortie ($X_I$) est filtré pour fournir un composant ($M_I$) dudit signal de sortie à ladite fréquence prédéterminée ; et

où ledit servo signal (Q) est basé sur une réciproque d'un ratio dudit composant ($M_O$) dudit signal de position initiale et ledit composant ($M_I$) dudit signal de sortie.

8. Le procédé selon la revendication 7, où ledit servo signal (Q) est un multiple de ladite réciproque.

9. Le procédé selon l'une des revendications 7 et 8, comprenant en outre l'étape de mémorisation (S114) d'une valeur dudit servo signal (Q) dans une mémoire.

10. Le procédé selon l'une des revendications 7 à 9, où l'étape de positionnement (S114) inclut l'étape de mise à disposition dudit servo signal (Q) à un assemblage de bras actuateur (108) pour contrôler une position de ladite tête.

FIG. IA

AMPLITUDE

−h    0    h    x

FIG. IB

AMPLITUDE

k

−0.5h    0    0.5h    y

FIG. 2A

AMPLITUDE

−h−d  −h    −d   0  d    h    h+d    x

FIG. 2B

AMPLITUDE

k

−0.5h−d  −0.5h    0    0.5h  0.5h+d    y

13

# FIG.3

FIG. 4

## FIG.5

```
                                                    ┌─120
                                              ┌─154
  ┌─110                    ┌─152                    ┌─156
  ┌──────┐              ┌─────────┐         ┌─────────────┐
  │      │──────────────▶│ PREAMP  │────────▶│  R/W AGC    │
  └──────┘              └─────────┘         │  & FILTER   │
  ┌──────┐                                  └─────────────┘
  │ ▦▦   │                                         │
  └──────┘                                         ▼     ┌─158
    102                                     ┌─────────────┐
                                            │  FULLWAVE   │
                                            │  RECTIFIER  │
                                            └─────────────┘
                                                   │    ┌─160
                                                   ▼
                                            ┌─────────────┐
                                            │    PEAK     │
                                            │  DETECTOR   │
                                            └─────────────┘
                                        READ/WRITE    CHANNEL
                                                      CIRCUIT
```

READ/WRITE    CHANNEL CIRCUIT

```
      ┌─168                      ┌─164
  ┌──────────┐              ┌──────────┐
  │  BURSTS  │              │   ADC    │
  │SEQUENCER │      166     └──────────┘
  │ & TIMING │       │       A  B   C  D
  └──────────┘      DSP
                               ┌────────────────┐ ┌─172
                     X₀        │  LOGIC CIRCUIT │
            ┌─174             └────────────────┘
      ┌──────────┐                  │ X₀
      │CALIBRATION│        X         ▼
      │ CIRCUIT  │──────────────────▶(Σ)──176
      └──────────┘                  │ X₁
       M₀  M₁                        ┌────────────────────┐ ┌─178
                                     │ CONTROL LOGIC CIRCUIT│
                                     └────────────────────┘
  SERVO CONTROLLER                        │ Q      ┌─170
                                     ┌──────────────┐
       162                           │   MEMORY     │
                                     └──────────────┘
                                          │     ┌─108
                                     ┌──────────────┐
                                     │  ACTUATOR    │
                                     │ ARM ASSEMBLY │
                                     └──────────────┘
```

# FIG.6

**FIG. 7**

S100

START

S102

GENERATE RAW POSITION
SIGNAL $X_0$ BASED ON
READING OF SERVO BITS

S104

GENERATE EXCITATION SIGNAL $X$
AT PREDETERMINED FREQUENCY
$\omega_0$

S106

SUM $X_0$ AND $X$ TO PROVIDE $X_I$

S108

FILTER $X_0$ AND $X_I$ TO PROVIDE
SIGNALS $M_0$ AND $M_I$ WHICH
ARE COMPONENTS OF THE
SIGNALS $X_0$ AND $X_I$ AT THE
PREDETERMINED FREQUENCY $\omega_0$

S110

CALCULATE SYSTEM FREQUENCY
RESPONSE $M_0/M_I$

S112

CALCULATE COMPENSATION
SIGNAL $KK/(M_0/M_I)$

S114

STORE COMPENSATION SIGNAL
OR USE COMPENSATION SIGNAL
TO MOVE R/W HEADS

RETURN

## *FIG.8A*

## *FIG.8B*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5369345 A